(19) **Europäisches Patentamt / European Patent Office / Office européen des brevets**

(11) **EP 4 672 684 A1**

(12) **EUROPEAN PATENT APPLICATION**
published in accordance with Art. 153(4) EPC

(43) Date of publication:
**31.12.2025 Bulletin 2026/01**

(21) Application number: **23923365.3**

(22) Date of filing: **23.02.2023**

(51) International Patent Classification (IPC):
**H04L 27/04** (2006.01)

(52) Cooperative Patent Classification (CPC):
**H04L 27/04**

(86) International application number:
**PCT/CN2023/077999**

(87) International publication number:
**WO 2024/174188 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **HE, Chuanfeng
  Dongguan, Guangdong 523860 (CN)**
• **QI, Yinan
  Dongguan, Guangdong 523860 (CN)**
• **XU, Weijie
  Dongguan, Guangdong 523860 (CN)**
• **ZUO, Zhisong
  Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **WIRELESS COMMUNICATION METHODS, AND DEVICES**

(57) Provided in the embodiments of the present application are wireless communication methods, and devices, by means of which methods and devices first symbols and/or second symbols in a target signal can be generated on the basis of at least one of the number of sub-carriers, a spacing between non-zero assigned sub-carriers, a sub-carrier spacing, and a frequency band-width. A wireless communication method comprises: a first communication device sending a target signal, wherein the target signal is a signal carrying information by means of a signal amplitude, the target signal comprises n first symbols and/or m second symbols, the first symbols are at a first level, and the second symbols are at a second level, the first level being higher than the second level, and m and n both being posi-tive integers; the n first symbols are generated on the basis of at least one of the following: the number of sub-carriers, a spacing between non-zero assigned sub-carriers, a sub-carrier spacing, and a frequency bandwidth; and/or the m second sym-bols are generated on the basis of at least one of the following: the number of sub-carriers, the spacing between non-zero assigned sub-carriers, the sub-carrier spacing, and the frequency bandwidth.

200

First communication device — Second communication device

S210, the first communication device transmits a target signal to the second communication device, wherein the target signal is a signal carrying information based on a signal amplitude, and the target signal includes n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or the m second symbols are generated based on at least one of: a number of subcarriers, a spacing between non-zero assigned subcarriers, a subcarrier spacing, or a frequency bandwidth

S220, the second communication device receives the target signal from the first communication device

FIG. 10

EP 4 672 684 A1

## Description

### TECHNICAL FIELD

Embodiments of the present disclosure relate to the technical field of communications, and in particular, to a method and device for wireless communication.

### RELATED ART

Currently, in order to save energy, a receiver with extremely low power consumption and complexity are introduced to receive a signal carrying information based on a signal amplitude. How to generate the signal carrying information based on the signal amplitude is a problem that needs to be addressed.

### SUMMARY

Embodiments of the present disclosure provide a method and device for wireless communication. A first communication device may generate at least one of a first symbol or a second symbol in a target signal based on at least one of a number of subcarriers, a spacing between non-zero-assigned subcarriers, a subcarrier spacing, or a frequency bandwidth, such that the first symbols with various lengths and/or the second symbols with various lengths are generated, thereby achieving more flexible and variable data transmission rates for different coverage scenarios.

According to a first aspect of the embodiments of the present disclosure, a method for wireless communication is provided. The method is performed by a first communication device. The method includes: transmitting a target signal, wherein the target signal is a signal carrying information based on a signal amplitude, and the target signal includes n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

According to a second aspect of the embodiments of the present disclosure, a method for wireless communication is provided. The method is performed by a second communication device. The method includes: receiving a target signal, wherein the target signal is a signal carrying information based on a signal amplitude, and the target signal includes n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

According to a third aspect of the embodiments of the present disclosure, a communication device is provided. The communication device is a first communication device. The communication device is configured to perform the method in the first aspect. Specifically, the communication device includes a function module configured to perform the method in the first aspect.

According to a fourth aspect of the embodiments of the present disclosure, a communication device is provided. The communication device is a second communication device. The communication device is configured to perform the method in the second aspect. Specifically, the communication device includes a function module configured to perform the method in the second aspect.

According to a fifth aspect of the embodiments of the present disclosure, a communication device is provided. The communication device is a first communication device. The communication device includes: a processor and a memory configured to store at least one computer program, wherein the processor, when loading and running the at least one computer program from the memory, causes the communication device to perform the method in the first aspect.

According to a sixth aspect of the embodiments of the present disclosure, a communication device is provided. The communication device is a second communication device. The communication device includes: a processor and a memory configured to store at least one computer program, wherein the processor, when loading and running the at least one computer program from the memory, causes the communication device to perform the method in the second aspect.

According to a seventh aspect of the embodiments of the present disclosure, an apparatus is provided. The apparatus is configured to perform the method in any of the first aspect or the second aspect.

Specifically, the apparatus includes: a processor, wherein the processor, when loading and running at least one computer program from a memory, causes a device equipped with the apparatus to perform the method in any of the first aspect or the second aspect.

According to an eighth aspect of the embodiments of the present disclosure, a computer-readable storage medium is provided. The computer-readable storage medium is configured to store at least one computer program, wherein the at least one computer program, when loaded and run by a computer, causes the computer to perform the method in any of the first aspect or the second aspect.

According to a ninth aspect of the embodiments of the present disclosure, a computer program product is provided. The computer program product includes at least one computer program instruction, wherein the at least one computer program instruction, when loaded and executed by a computer, causes the computer to perform the method in any one of the first aspect or the second aspect.

According to a tenth aspect of the embodiments of the present disclosure, a computer program is provided. The computer program, when loaded and run by a computer, causes the computer to perform the method in any of the first aspect or the second aspect.

With the above technical solutions, the first communication device can generate at least one of a first symbol or a second symbol in a target signal based on at least one of a number of subcarriers, a spacing between non-zero-assigned subcarriers, a subcarrier spacing, or a frequency bandwidth, such that the first symbols with various lengths and/or the second symbols with various lengths are generated, thereby achieving more flexible and variable data transmission rates for different coverage scenarios.

**BRIEF DESCRIPTION OF DRAWINGS**

FIG. 1 is a schematic diagram of a communication system architecture according to some embodiments of the present disclosure;

FIG. 2 is a block diagram of a receiver system based on a terminal according to some embodiments of the present disclosure;

FIG. 3 is a schematic diagram of a WUR PPDU frame according to some embodiments of the present disclosure;

FIG. 4 is a schematic diagram of a WUR synchronization sequence according to some embodiments of the present disclosure;

FIG. 5 is a schematic diagram of a WUR-data part carrying user information according to some embodiments of the present disclosure;

FIG. 6 is a schematic diagram of a MC-OOK signal generated by a multicarrier according to some embodiments of the present disclosure;

FIG. 7 is a block diagram of an On-WG system according to some embodiments of the present disclosure;

FIG. 8 is a schematic diagram of a repeating waveform with a period of 32 sample points according to some embodiments of the present disclosure;

FIG. 9 is a schematic diagram of a 2-$\mu$s-long On symbol according to some embodiments of the present disclosure;

FIG. 10 is a schematic flowchart of a method for wireless communication according to some embodiments of the present disclosure;

FIG. 11 is a schematic diagram of generating On symbols according to some embodiments of the present disclosure;

FIG. 12 is a schematic diagram of generating On symbols according to some other embodiments of the present disclosure;

FIG. 13 is a schematic diagram of generating On symbols and Off symbols according to some embodiments of the present disclosure;

FIG. 14 is a schematic flowchart of generating On symbols and Off symbols on a time domain according to some embodiments of the present disclosure;

FIG. 15 is a schematic diagram of a masking window for generating 1010 according to some embodiments of the present disclosure;

FIG. 16 is a schematic diagram of an input of a process of Masking or OOK modulation being bits acquired by encoding information bits according to some embodiments of the present disclosure;

FIG. 17 is a schematic diagram of generating On symbols and Off symbols according to some other embodiments of the present disclosure;

FIG. 18 is a schematic block diagram of a communication device according to some embodiments of the present disclosure;

FIG. 19 is a schematic block diagram of another communication device according to some embodiments of the present disclosure;

FIG. 20 is a schematic block diagram of yet another communication device according to some embodiments of the present disclosure;

FIG. 21 is a schematic block diagram of an apparatus according to some embodiments of the present disclosure; and

FIG. 22 is a schematic block diagram of a communication system according to some embodiments of the present disclosure.

**DETAILED DESCRIPTION**

The technical solutions according to the embodiments of the present disclosure are described hereinafter in combination with the accompanying drawings in the embodiments of the present disclosure. It is obvious that the described embodiments are merely part but not all of the embodiments of the present disclosure. All other embodiments derived by those skilled in the art without creative efforts based on the embodiments in the present disclosure are within the protection scope of the disclosure.

The technical solutions according to the embodiments of the present disclosure are applicable to various communication systems, for example, a global system of mobile communication (GSM) system, a code division multiple access (CDMA) system, a wideband code division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a Internet of things (IoT), a wireless fidelity (Wi-Fi), a 5th generation (5G) system, a 6th generation (6G) system, or other communication systems.

In general, traditional communication systems support a limited number of connections and are easy to implement. However, with the development of communication technologies, the mobile communication system supports traditional communications and other communications, for example, device-to-device (D2D) communications, machine-to-machine (M2M) communications, machine type communications (MTC), vehicle-to-vehicle (V2V) communications, sidelink (SL) communications, vehicle-to-everything (V2X) communications, and the like. The embodiments of the present disclosure are applicable to the communication systems.

In some embodiments, the communication system in the embodiments of the present disclosure is applicable to a carrier aggregation (CA) scenario, a dual connectivity (DC) scenario, a standalone (SA) networking scenario, or a non-standalone (NSA) networking scenario.

In some embodiments, the communication system in the embodiments of the present disclosure is applicable to an unlicensed spectrum, wherein the unlicensed spectrum is also construed as a shared spectrum. Alternatively, the communication system in the embodiments of the present disclosure is applicable to a licensed spectrum, and the licensed spectrum is also construed as a non-shared spectrum.

In some embodiments, the communication system in embodiments of the present disclosure is applicable in an FR1 frequency band (corresponding to a band range of 410 MHz to 7.125 GHz), or in an FR2 frequency band (corresponding to a band range of 24.25 GHz to 52.6 GHz), or in new frequency bands such as high frequency bands corresponding to a band range of 52.6 GHz to 71 GHz or a band range of 71 GHz to 114.25 GHz.

The embodiments of the present disclosure are described in conjunction with a zero-power device. The zero-power device is also referred to as a user equipment (UE), an access terminal, a subscriber unit, a subscriber station, a mobile station, a mobile, a remote station, a remote terminal, a mobile device, a user terminal, a terminal, a wireless communication device, a user proxy, a user device, or the like.

The zero-power device is a station (STA) or a non-access point (non-AP) STA in WLAN, a cellular phone, a cordless phone, a Session Initiation Protocol (SIP) phone, a wireless local loop (WLL) station, a personal digital assistant (PDA) device, a hand-held device with a wireless communication capability, a computing device or other processing devices connected to a wireless modem, an in-vehicle device, a wearable device, a next generation communication system, such as a terminal device in NR, a terminal device in an evolved public land mobile network (PLMN), or the like.

In the embodiments of the present disclosure, the zero-power device is deployed on the land, for example, indoors or outdoors, handheld, wearable, or in vehicles; or the zero-power device is deployed on water (for example, on a ship); or the zero-power device is deployed in air (for example, on an airplane, a balloon, or a satellite).

In the embodiments of the present disclosure, the zero-power device is a mobile phone, a pad, a computer with a radio transceiver function, a virtual reality (VR) device, an augmented reality (AR) device, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, an in-vehicle communication device, a wireless communication chip/application specific integrated circuit (ASIC)/system-on-chip (SoC), or the like.

By way of example but not limitation, in the embodiments of the present disclosure, the zero-power device may also be a wearable device. The wearable device is also referred to as a wearable smart device, and is a generic name of wearable devices such as glasses, gloves, watches, clothing, and shoes, which are intelligently designed and developed for daily wear by using wearable technologies. The wearable device is a portable device that is directly worn on the body or integrated into clothing or accessories of the user. The wearable device is not only a hardware device, but also implements powerful functions by software support, data interaction, and cloud interaction. The wearable smart device in a broad sense includes devices such as smart watches or smart glasses that have full functionality and large size, and are capable of implementing all or part of functionality without depending on the smart phone, and devices such as various kinds of smart bracelets and smart jewelries for monitoring physical signs, which are dedicated to a specific type of application functions and need to be used in cooperation with other devices such as the smart phone.

In the embodiments of the present disclosure, the network device is a device for communicating with the zero-power device, the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, a network device or a base station (gNB) or a transmission reception point (TRP) in an NR network, or a network device in an evolved PLMN or an NTN.

By way of example but not limitation, in the embodiments of the present disclosure, the communication device is mobile. For example, the communication device is a mobile device. In some embodiments, the communication device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the communication device is also a base station located on land, water, or the like.

In the embodiments of the present disclosure, the communication device provides services for cells, and the zero-power device communicates with the network device over the transmission resources (such as frequency domain resources, or spectrum resources) used in the cells. The cell is a cell corresponding to the network device (such as the base station), and the cell may belong to the macro base station or a base station corresponding to a small cell. The small cell may include: a metro cell, a micro cell, a pico cell), or a femto cell, or the like. The small cells have the small coverage and low transmission power, and are suitable for providing high-rate data transmission services.

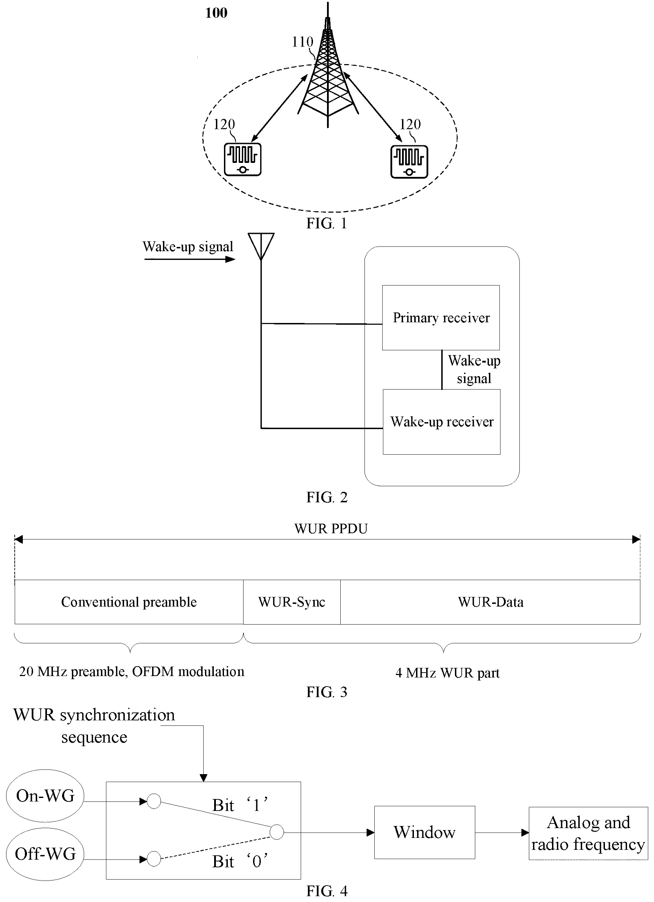

In some embodiments, the communication system 100 applied in the embodiments of the present disclosure is illustrated in FIG. 1. The communication system 100 may include a communication device 110. The communication device 110 may be a device that communicates with a zero-power device 120 (or referred to as a communication terminal or a terminal). The communication device 110 may provide communication coverage for a specific geographical area, and may communicate with zero-power devices within the coverage.

FIG. 1 illustrates one communication device and two zero-power devices. In some embodiments, the communication system 100 may include a plurality of communication devices and other numbers of zero-power devices may be included within the coverage of each of the communication devices, which are not limited in the embodiments of the present disclosure.

In some embodiments, the communication system 100 may also include other network entities such as a network controller, a mobility management entity, or the like, which are not limited in the embodiments of the present disclosure.

It should be understood that the devices having communication functions in the network/system in the embodiments of the present disclosure may be referred to as communication devices. Using the communication system 100 illustrated in FIG. 1 as an example, the communication device may include the communication device 110 and the zero-power device 120 having the communication function. The communication device 110 and the zero-power device 120 may be specific devices as described above, which are not elaborated herein for brevity. The communication device may also include other devices in the communication system 100, such as the network controller, the mobile management entity, and other network entities, which are not limited in the embodiments of the present disclosure.

It should be understood that the terms "system" and "network" herein are interchangeably used. The term "and/or" herein describes an association between associated objects, and indicates three types of relationships. For example, the phrase "A and/or B" means (A), (B), or (A and B). In addition, the symbol "/" generally indicates an "or" relationship between the associated objects.

The terms used in the embodiments of the present disclosure are intended to explain the specific embodiments of the present disclosure, not to limit the present disclosure. The terms "first," "second," "third," and "fourth," and the like in the specification and claims of the present disclosure and the accompanying drawings are used to distinguish different objects, not to describe a specific order. In addition, the terms "include" and "have" and any variations thereof are intended to cover non-exclusive inclusion.

It should be understood that the term "indicate" in the embodiments of the present disclosure means a direct indication, an indirect indication, or an indication that an association is present. For example, A indicating B means that A indicates B directly, e.g., B may be acquired by A; or that A indicates B indirectly, e.g., A indicates C by which B may be acquired; or that an association is present between A and B.

In the description of the embodiments of the present disclosure, the term "corresponding" means a direct correspondence or an indirect correspondence between two objects, an association between two objects, a relationship of indicating and being indicated, or a relationship of configuring and being configured.

In the embodiments of the present disclosure, the "predefinition" or "pre-configuration" is achieved by pre-storing corresponding codes or tables in the device (for example, including the terminal device and the network device) or other means for indicating relevant information, and the specific implementations are not limited in the present disclosure. For example, the predefinition is defined in the protocol.

In the embodiments of the present disclosure, the "protocol" indicates standard protocols in the field of communications, for example, the LTE protocol, the NR protocol, the Wi-Fi protocol, or evolutions of other protocols related to communication systems. The types of the protocols are not limited in the present disclosure.

With the increase of 5G industry applications, the types of connected objects and application scenarios increase, and higher requirements are proposed for the price and power consumption of communication terminals. Applications of battery-free, low-cost passive IoT devices become the key technology of cellular IoT, which enriches the types and the number of the terminals linked in the 5G network, thereby truly achieving the interconnection of all things. The passive IoT devices may be based on an existing zero-power device, such as radio frequency identification (RFID) technology, and evolve based on the existing zero-power device to be applicable to the cellular IoT.

For better understanding of the embodiments of the present disclosure, the categorization of zero-power devices related to the present disclosure is described.

In some embodiments, the zero-power devices may be categorized into passive zero-power devices, semi-passive zero-power devices, and active zero-power devices based on the energy source of the zero-power devices and the way of using the energy.

1) Passive zero-power device

The zero-power device does not require an internal battery. In a case where the zero-power device is close to a network device (e.g., a writer/reader of an RFID system), the zero-power device is in the near-field formed by radiation from an antenna of the network device. Therefore, an antenna of the zero-power device generates an induced current via electromagnetic induction, and the induced current drives a low-power chip circuit of the zero-power device. The demodulation of a forward link signal and modulation of a reverse link signal are achieved. With respect to the backscatter link, the zero-power device achieves signal transmission by backscattering.

Evidently, the passive zero-power device does not need to be driven by the internal battery for either the forward link or the reverse link, and the passive zero-power device is a true zero-power device.

The passive zero-power device does not need batteries, and the RF circuit and baseband circuit of the passive zero-power device are very simple. For example, the passive zero-power device does not require devices such as a low noise amplifier (LNA), a power amplifier (PA), a crystal oscillator, an analog-to-digital converter (ADC), and the like, and thus the passive zero-power device has the advantages of small size, light weight, low prices, and long service life.

2) Semi-passive zero-power device

The semi-passive zero-power device does not install a conventional battery, but the semi-passive zero-power device is capable of harvesting radio wave energy using the RF energy harvesting module, or harvesting energy using solar/light/thermal/kinetic energy harvesting module, while storing the harvested energy in an energy storage unit (e.g., a capacitor). Upon acquiring energy, the energy storage unit is capable of driving a low-power chip circuit of the zero-power device. The demodulation of a forward link signal and modulation of a reverse link signal are achieved. With respect to the backscatter link, the zero-power device achieves signal transmission by backscattering.

Evidently, the semi-passive zero-power device does not need to be driven by the internal battery for either the forward link or the reverse link, and although the semi-passive zero-power device operates with energy stored in the capacitor, the energy is derived from radio energy harvested by the energy harvesting module, such that the semi-passive zero-power device a true zero-power device.

The semi-passive zero-power device inherits many of the advantages of the passive zero-power device. The semi-passive zero-power device has many advantages such as small size, light weight, low price, and long service life.

3) Active zero-power device

In some scenarios, the zero-power device is the active zero-power device, and such a terminal has an internal battery (a conventional battery, such as a dry cell battery, a rechargeable lithium battery, or the like). The battery is configured to drive a low-power chip circuit of the zero-power device. The demodulation of a forward link signal and modulation of a reverse link signal are achieved. With respect to the backscatter link, the zero-power device achieves signal transmission by backscattering. Therefore, the zero-power consumption of this type of terminal is mainly reflected in the fact that the signal transmission of the reverse link does not require the power of the terminal itself, but uses the backscattering. Although active zero-power device uses the battery, but due to the use of the ultra-low-power communication technology, the power consumption is very low, such that the operating life of the battery is greatly improved compared with existing technologies.

In the active zero-power device, the built-in battery supply power to the RFID chip, such that the tag reading distance and the reliability of communication can be increased. Therefore, the active zero-power device is applicable to scenarios with high requirements on the communication distance and read delay.

For better understanding of the embodiments of the present disclosure, the device based on ambient energy related to the present disclosure are described.

In NR systems and Wi-Fi systems, the battery-free and low-cost of devices can support the low-cost mass deployment and maintenance-free of devices such as IoT devices. The current standard explores the way to support IoT devices based on the ambient energy (also referred to as ambient power (AMP)) in the NR systems and Wi-Fi systems, wherein the IoT devices based on the AMP is also referred to as an ambient IoT, or an AMP IoT device. The energy required for the operation of the IoT device based on the AMP is collected from the ambient energy. The ambient energy source may be wireless signals, solar energy, thermal energy, or the like. These devices are similar to passive or semi-passive devices in zero-power communication.

For better understanding of the embodiments of the present disclosure, the energy saving of a terminal based on a wake-up receiver related to the present disclosure is described.

For saving power in a user equipment (UE), a wake-up receiver is introduced to receive a wake-up signal. The wake-up receiver has very low cost, very low complexity and very low power consumption, and the wake-up receiver mainly receives the wake-up signal based on envelope detection. Therefore, the modulation and the waveform of the wake-up signal (WUS) received by the wake-up receiver is different from that of a signal carried by a physical downlink control channel (PDCCH). The wake-up signal is mainly an envelope signal acquired by modulating a carrier signal by amplitude shift keying (ASK), and the wake-up signal is received by through the wake-up receiver. The wake-up receiver may be used as an independent receiver of the terminal to wake up the primary receiver of the terminal.

The block diagram of a receiver system based on the terminal is illustrated in FIG. 2. The wake-up receiver receives the wake-up signal, and the primary receiver of the terminal may turn on based on wake-up information carried by the wake-up signal; and otherwise, the primary receiver of the UE may be in an off state.

For better understanding of the embodiments of the present disclosure, the wake-up signal related to the present disclosure is described.

In 802.11ba technology, the WUR signal is used to achieve the energy saving of devices. The WUR AP notifies an energy saving operation of the WUR non-AP STA over the WUR frame. The WUR frame is carried in a WUR physical layer protocol data unit (PPDU) frame. One WUR PPDU frame includes three parts, which are a legacy preamble, a WUR synchronization (WUR-Sync), and a WUR data (WUR-Data). As illustrated in FIG. 3, the legacy preamble is used to protect the WUR-Sync and WUR-Data. The legacy preamble is a non-WUR part reserved for compatibility, which uses a conventional orthogonal frequency-division multiplexing (OFDM) modulation and 20 MHz bandwidth. The WUR-Sync is used to identify and demodulate the WUR data. The WUR-Data is used to carry a WUR physical layer service data unit (PSDU).

The WUR-Sync and the WUR-data adopt On-Off keying (OOK) modulation and 4 MHz bandwidth. The principle of the OOK modulation is modulating amplitudes of carrier signals into non-zero and zero values, corresponding to On and Off respectively, which are used to represent the information bits. The OOK is also referred to as binary amplitude keying (2ASK). As illustrated in FIG. 4, the WUR-Sync carries a synchronization sequence repeated twice, wherein the bit 1 in the sequence is modulated to On, and the bit 0 is modulated to Off.

The synchronization sequence uses a predefined sequence W including 32 bits, and different sequences indicate different data rates used in the WUR-data. The synchronization sequence corresponding to a WUR low data rate (LDR) is as follows:

W = [1 0 1 0 0 1 0 0 1 0 1 1 1 0 1 1 0 0 0 1 0 1 1 1 0 0 1 1 1 0 0 0].

The synchronization sequence corresponding to a WUR high data rate (HDR) is as follows:

W = [0 1 0 1 1 0 1 1 0 1 0 0 0 1 0 0 1 1 1 0 1 0 0 0 1 1 0 0 0 1 1 1].

Each bit in the WUR-Sync is mapped into a 2-$\mu$s-long multi-carrier OOK (MC-OOK) symbol using the OOK modulation. The MC-OOK symbols may be On symbols and Off symbols, wherein the On symbols may be generated by an On wave generator (WG).

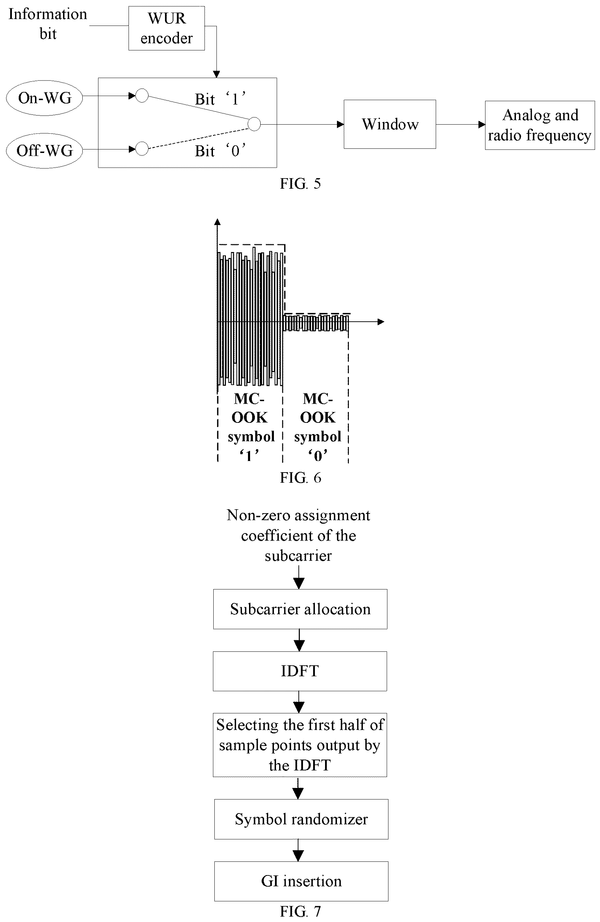

The WUR-data carries user information. The user information is encoded and OOK modulated to form MC-OOK symbols of the corresponding length, as illustrated in FIG. 5.

The MC-OOK symbol lengths corresponding to the WUR LDR and the WUR HDR are 4 $\mu$s and 2 $\mu$s, respectively. The OOK signals are generated by multicarrier (MC), such that the OOK signal is also referred to as MC-OOK signals. The MC-OOK signals may be generated using existing multicarrier modulation, such as OFDM modulation, thereby maintaining good compatibility with existing OFDM systems and reducing the complexity of the transmitter introduced to achieve WUR signals. FIG. 6 illustrates a schematic diagram of the MC-OOK signal generated by the multicarrier. By mapping the corresponding amplitude values of multiple subcarriers in the frequency domain, a waveform of the signal in the time domain converted using an inverse discrete Fourier transform (IDFT) is approximated to a waveform formed by ASK modulation, wherein a bit 1 is represented by the high level of the signal and a bit 0 is represented by the low level of the signal.

For better understanding of the embodiments of the disclosure, the problems addressed by the disclosure are described.

In 802.11ba, a WUR signal generates, within a 20 MHz bandwidth, an on waveform using 13 subcarriers in a center of a 64-point IDFT. With respect to the LDR, a length of the OOK symbol is 4 $\mu$s, which is the same as that of the OFDM symbol. The OOK symbol includes a 3.2-$\mu$s IDFT duration and a 0.8-$\mu$s guard interval (GI). 12 subcarriers with subcarrier indexes being k = (-6, -5, ..., -1, 1, 2, ..., 6) in 13 subcarriers are assigned non-zero values, and the other subcarriers are not assigned values. With respect to the HDR, a length of OOK symbols is 2 $\mu$s. The OOK symbol includes a 1.6-$\mu$s IDFT duration and a 0.4-$\mu$s GI. 6 subcarriers with subcarrier indexes being k = (-6, -4, -2, 2, 4, 6) in 13 subcarriers are assigned non-zero values, and the other subcarriers are not assigned values. This is equivalent to an extraction operation in the frequency domain at an interval of one subcarrier. A corresponding time-domain waveform upon the IDFT transform is going to repeat twice with a period of 1.6 $\mu$s.

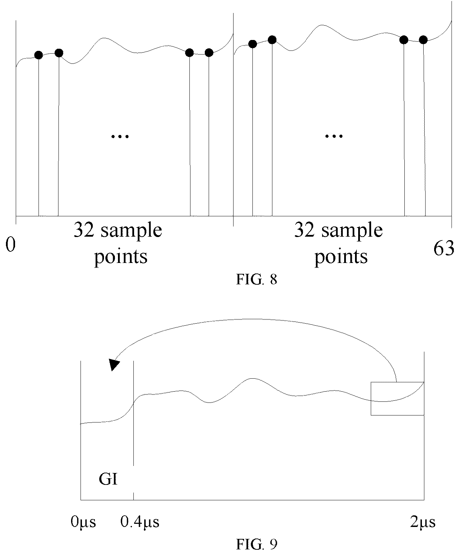

Specifically, a 2-$\mu$s-long On symbol is generated by the On-WG. FIG. 7 illustrates a system block diagram of the On-WG, which specifically includes the following processes: inputting a non-zero assignment coefficient of the subcarrier, subcarrier allocation, performing IDFT process, selecting the first half of sample points output by the IDFT, symbol randomizer (in order to smooth the sample point), GI insertion. In FIG. 7, upon the assignment of the 13 subcarriers, 64 samples are generated by the IDFT transform. Then the first 32 samples are selected. Because of the assignment of 6 subcarriers out of 13 subcarriers, after the IDFT transform, a repeated waveform with a period of 32 sample points is formed. As illustrated in FIG. 8, the last 8 sample points in the first 32 sample points are determined as GI, and these 8 sample points are copied to the front of the 32 sample points to generate 40 sample points, wherein the 40 sample points represent the 2-$\mu$s-long On symbol, as illustrated in FIG. 9.

Specifically, a 2-$\mu$s-long Off symbol is generated by an Off-WG, and energy corresponds to the 32 sample points are zero.

In 802.11ba, the On symbols and the Off symbols are generated by the On-WG and the Off-WG, respectively. The length of the OOK symbols only supports 4 $\mu$s and 2 $\mu$s, which corresponds to two data rates. For the data transmission of AMP devices or WUR signals in NR systems, more flexible data rates are needed to adapt to different coverage scenarios. Therefore, a more flexible method for generating the OOK signal that can generate a plurality of OOK symbol lengths is needed.

Based on the above problems, a signal generation scheme is proposed in the present disclosure. A first communication device may generate first symbols and/or second symbols in a target signal based on at least one of a number of subcarriers, a spacing between non-zero-assigned subcarriers, a subcarrier spacing, or a frequency bandwidth, such that the first symbols with various lengths and/or the second symbols with various lengths are generated, and more flexible and variable data transmission rates are achieved to adapt to different coverage scenarios.

In order to facilitate the understanding of the technical solutions of the embodiments of the present disclosure, a detailed description of the technical solutions of the present disclosure is provided hereinafter with specific embodiments. The following related arts can be combined with the technical solutions of the embodiments of the present disclosure in any manner, which all fall within the protection scope of the embodiments of the present disclosure. The embodiments of the present disclosure include at least some of the following contents.

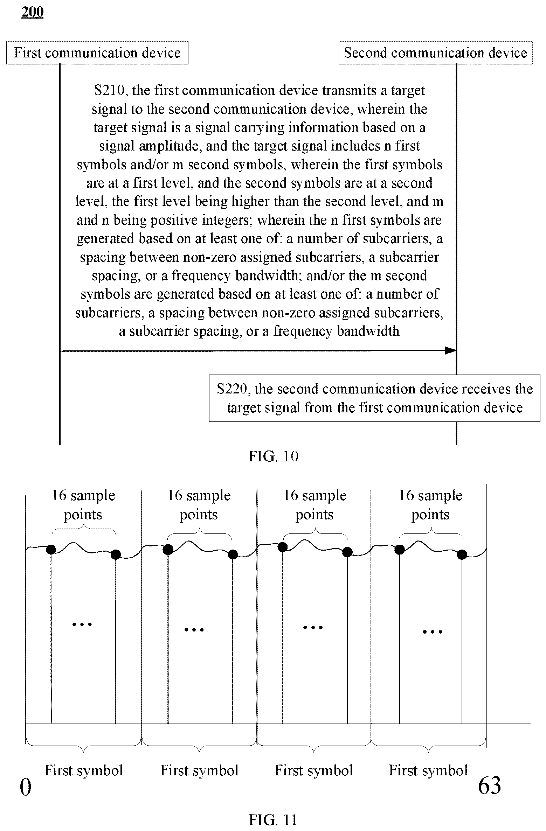

FIG. 10 is a schematic flowchart of a method 200 for wireless communication according to some embodiments of the present disclosure. As illustrated in FIG. 10, the method 200 for wireless communication may include at least some of the following contents.

In S210, the first communication device transmits a target signal to the second communication device, wherein the target signal is a signal carrying information based on a signal amplitude, and the target signal includes n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

In S220, the second communication device receives the target signal from the first communication device.

In the embodiments of the present disclosure, the first communication device is able to generate the first symbols and/or the second symbols in the target signal based on at least one of the number of subcarriers, the spacing between the non-zero-assigned subcarriers, the subcarrier spacing, or the frequency bandwidth, such that the first symbols with various lengths and/or the second symbols with various lengths are generated, thereby achieving more flexible and variable data transmission rates to adapt to different coverage scenarios.

In the embodiment of the present disclosure, the first symbol (e.g., an On symbol) may be a high-level part of the target signal, and an amplitude value of the first symbol may be a specific value or a value within a range of values. The second symbol (e.g., an Off symbol) may be a low-level part of the target signal, and an amplitude value of the second symbol may be a specific value or a value within a range of values.

In some embodiments, a difference between an amplitude of the first symbol and an amplitude of the second

**EP 4 672 684 A1**

symbol is greater than a first threshold, and/or, a ratio of the amplitude of the first symbol to the amplitude of the second symbol is greater than a second threshold, such that a modulation depth between the high-level and low-level symbols in the target signal satisfies a demodulation requirement.

In some embodiments, the first communication device is an ambient energy base station, or the first communication device is an ambient energy access point, or the first communication device is an ambient energy relay device.

In some embodiments, the second communication device is an ambient energy terminal, or the second communication device is an ambient energy station, or the second communication device is a zero-power device. In addition, the second communication device may be a battery-free terminal, a maintenance-free terminal, or the like.

Specifically, the second communication device (e.g., the ambient energy terminal or the zero-power device or the ambient energy station) may collect energy required for communication by harvesting ambient energy (e.g., light energy, thermal energy, wind energy, radio frequency energy, mechanical energy, or kinetic energy), and may support a communication method of active emission. The first communication device (e.g., the ambient energy base station or the ambient energy access point or the ambient energy relay device) may be a device communicating with the second communication device, and may be a conventional device (e.g., a gNB or an AP or a relay terminal), or the first communication device may, like the second communication device, collect the energy necessary for communication by harvesting ambient energy (e.g., light energy, thermal energy, wind energy, radio frequency energy, mechanical energy, kinetic energy, and the like) and may support the communication method of active emission.

For example, the first communication device is the ambient energy base station, the second communication device is the ambient energy terminal, or the second communication device is the zero-power device; in addition, the second communication device may be the battery-free terminal, the maintenance-free terminal, or the like.

For another example, the first communication device is the ambient energy access point, the second communication device is an ambient energy station, or the second communication device is a zero-power device; in addition, the second communication device may be the battery-free terminal, the maintenance-free terminal, or the like.

For yet another example, the first communication device is the ambient energy relay device, the second communication device is the ambient energy terminal, or the second communication device is the zero-power device; in addition, the second communication device may be the battery-free terminal, the maintenance-free terminal, or the like.

The ambient energy device (e.g., the ambient energy terminal, the ambient energy station, the ambient energy base station, the ambient energy access point, the ambient energy relay device, or the like) involved in the embodiments of the present disclosure may also be referred to as an "ambient power enabled IoT device" or an "ambient IoT device." Specifically, the ambient IoT device means an IoT device that uses a variety of ambient energy, such as radio frequency energy, light energy, solar energy, thermal energy, mechanical energy, or the like. The ambient IoT device may have no energy storage capacity, or may have a very limited energy storage capacity (e.g., a few tens of microfarads ($\mu$Fs)).

In the embodiments of the present disclosure, the ambient energy station (AMP STA) is an STA device in Wi-Fi technology that operates with energy harvested from the external environment. The ambient energy access point (AMP AP) is an AP device in Wi-Fi technology that can communicate or supply energy to the AMP STA. Accordingly, for 3GPP technology, the AMP type of device may be the AMP terminal device and the AMP network device. The devices involved in the present disclosure are not limited to AMP devices, other types of zero-power devices can also be used in the embodiments of the present disclosure. The AMP devices or the zero-power devices do not limit the source and use of energy, the energy required for operation is harvested from the external environment, such as radio frequency energy, light energy, pressure energy, or the like. Alternatively, the energy required for operation acquires from the power supply of the terminal itself, in which case the AMP device or the zero-power device may be a low-power terminal. The definition of the zero-power terminal or the low-power terminal mainly includes such features as low complexity, support for ambient energy supply, and new waveforms.

In some embodiments, the target signal is an OOK signal or an MC-OOK signal. For example, the signals received by the second communication device (such as the ambient energy terminal or the zero-power device or the ambient energy station) are mainly based on ASK modulation, such as the OOK signal. The signals received by such devices (devices with extremely low power consumption and complexity) are not only wake-up signals used for waking up, but also signals used for transmitting user data.

In the embodiments of the present disclosure, the target signal is essentially demodulated at the receiver by detecting the high and low levels of the signal by envelope detection. Accordingly, the On symbol in the OOK signal corresponds to the high-level signal and the Off symbol corresponds to the low-level signal.

In some embodiments, in a case where the target signal at least includes the n first symbols, each of the first symbols includes a GI part and a symbol part, wherein a length of the symbol part of the first symbol is associated with at least one of the number of subcarriers or the spacing between the non-zero assigned subcarriers.

Specifically, the GI part of the first symbol has a predetermined length. That is, in the embodiments of the present disclosure, the length of the symbol part of the first symbol may be determined based on at least one of the number of subcarriers or the spacing between the non-zero assigned subcarriers. In addition, the first symbols with various lengths may be generated by adjusting at least one of the number of subcarriers or the spacing between the non-zero assigned

9

subcarriers.

In some embodiments, in a case where the length of the first symbol is at least associated with the spacing between the non-zero-assigned subcarriers, an association between the length of the first symbol and the spacing between the non-zero-assigned subcarriers is specified in the protocol or the association between the length of the first symbol and the spacing between the non-zero-assigned subcarriers is configured by the network device.

In some embodiments, in a case where the length of the first symbol is at least associated with the number of subcarriers, the association between the length of the first symbol and the number of subcarriers is specified in the protocol, or the association between the length of the first symbol and the number of subcarriers is configured by the network device.

In some embodiments, all first symbols corresponding to a first multicarrier modulation symbol are generated based on a first part of the first multicarrier modulation symbol. In some embodiments, the first multicarrier modulation symbol is a multicarrier modulation symbol output by a waveform generator associated with the first symbol subsequent to performing an IDFT process. In some embodiments, the first multicarrier modulation symbol may be an OFDM symbol.

In some embodiments, the n first symbols in the target signal may be part or all of all first symbols corresponding to the first multicarrier modulation symbol.

In some embodiments, the first part is a 1/W part of the first multicarrier modulation symbol, wherein an association is present between a value of W and the spacing between the non-zero assigned subcarriers, and W is a positive integer. In some embodiments, W first symbols may be generated in the first multicarrier modulation symbol.

For example, using the 2.4 GHz frequency band with a subcarrier spacing of 312.5 kHz as an example, the multicarrier modulation symbol, output subsequent to performing the IDFT process, corresponding to 20 MHz may include 64 sample points, and the first part can include 64/W sample points.

In some embodiments, the first part is a first 1/W part of the first multicarrier modulation symbol, or the first part is a last 1/W part of the first multicarrier modulation symbol.

For example, using the 2.4 GHz frequency band with the subcarrier spacing of 312.5 kHz as an example, the multicarrier modulation symbol, output subsequent to performing the IDFT process, corresponding to 20 MHz may include 64 sample points, and the first part may be the first 64/W sample points, or the first part may be the last 64/W sample points.

In some embodiments, the first part includes a part of an IDFT symbol length between $1/W * (i - 1) * $ IDFT symbol length and $1/W*i * $ IDFT symbol length, wherein i is a positive integer, $1 \leq i \leq W$, and the IDFT symbol length represents a duration of the multicarrier modulation symbol output by the waveform generator associated with the first symbol subsequent to performing the IDFT process.

In some embodiments, using the 2.4 GHz frequency band and the subcarrier spacing of 312.5 kHz as an example, the multicarrier modulation symbol, output subsequent to performing the IDFT process, corresponding to 20 MHz may include 64 sample points. The first symbol (e.g., the On symbol) with a symbol length of $1/W*4$ μs may be generated by intercepting first 64/W sample points in the 64 sample points. As illustrated in FIG. 11, in a case where W is equal to 4, the intercepted 16 sample points are repeated four times with the intercepted 16 sample points as a cycle, and a repeated waveform with a period of the 16 sample points is formed, then the first symbol (e.g., the On symbol) with a symbol length of 1 μs is generated, wherein GI includes four sample points and 20 sample points in total. Therefore, in the subcarrier mapping process, it is necessary to assign non-zero values to every four subcarriers, and subsequent to performing the IDFT transform, a corresponding time-domain waveform may be repeated four times with a period of 0.8 μs. For example, four subcarriers with subcarrier indexes k = (-6, -2, 2, 6) in 13 subcarriers are assigned non-zero values, and the other subcarriers are not assigned values.

Specifically, FIG. 11 illustrates an example with W being equal to 4. When W is further increased, the number of subcarriers may be correspondingly increased to satisfy the non-zero assignment (or extraction) operation of subcarriers with a larger interval in the frequency domain, such as performing non-zero assignment (or extraction) of subcarriers in 17 subcarriers. Thus, the length of the symbol part of the first symbol is associated with at least one of the number of subcarriers generating the first symbol or the spacing between the non-zero assigned subcarriers.

In these embodiments, by performing frequency domain extraction (which may also be referred to as subcarrier non-zero assignment), a periodic time-domain signal is generated, and one period of the time-domain signal is intercepted as an On symbol, which does not introduce additional frequency-domain components or does not generate additional frequency-domain leakage.

In some embodiments, a first multicarrier modulation symbol includes W parts, wherein all first symbols corresponding to the first multicarrier modulation symbol are generated based on the W parts of the first multicarrier modulation symbol, and/or, all second symbols corresponding to the first multicarrier modulation symbol are generated based on the W parts of the first multicarrier modulation symbol, wherein W is a positive integer. In some embodiments, the first multicarrier modulation symbol is the multicarrier modulation symbol output by the waveform generator associated with the first symbol subsequent to performing the IDFT process. In some embodiments, the first multicarrier modulation symbol is an ODFM symbol.

For example, using the 2.4 GHz frequency band with a subcarrier spacing of 312.5 kHz as an example, the multicarrier modulation symbol, output subsequent to performing the IDFT process, corresponding to 20 MHz may include 64 sample points, and each of the W parts may include 64/W samples.

In some embodiments, one of the W parts corresponds to a symbol part of the first symbol or a symbol part of the second symbol. In some embodiments, the part corresponding to the symbol part of the first symbol and the part corresponding to the symbol part of the second symbol respectively correspond to different modulations or different masking operations.

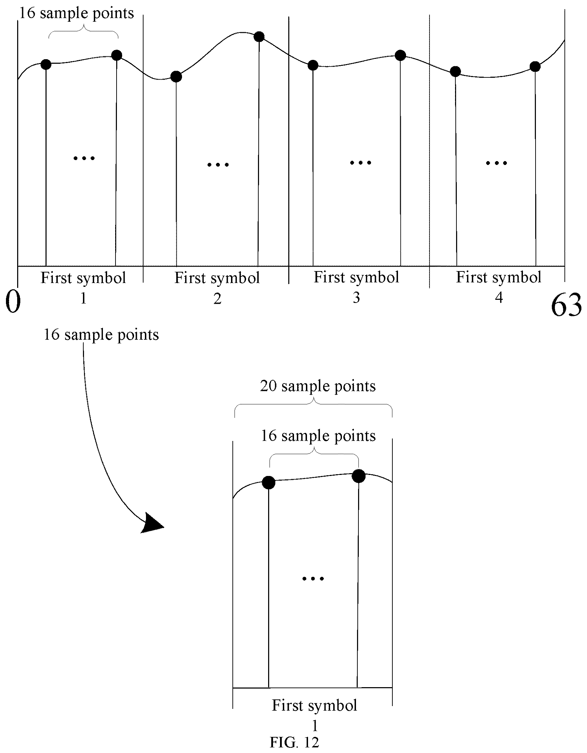

In some embodiments, using the 2.4 GHz frequency band with a subcarrier spacing of 312.5 kHz as an example, the multicarrier modulation symbol, output subsequent to performing the IDFT process, corresponding to 20 MHz may include 64 sample points, and a plurality of first symbols (e.g., On symbols) may be generated. By dividing the 64 samples into W parts (also referred to as sample point sets), W different first symbols (e.g., On symbols) may be generated. For example, one multicarrier modulation symbol is used to generate four different On symbols, and the 64 sample points output by the IDFT performed by the On-WG are sequentially divided into 4 non-overlapping parts (which may also be referred to as sample point sets), wherein each part includes 16 sample points. For each set including 16 sample points, an On symbol with 20 sample points is formed by inserting a GI into the set, wherein the On symbol corresponds to an On symbol length of 1 μs, as illustrated in FIG. 12.

In some embodiments, the second symbol (e.g., the Off symbol) is generated by the Off-WG, and energy corresponding to 64/W sample points is zero.

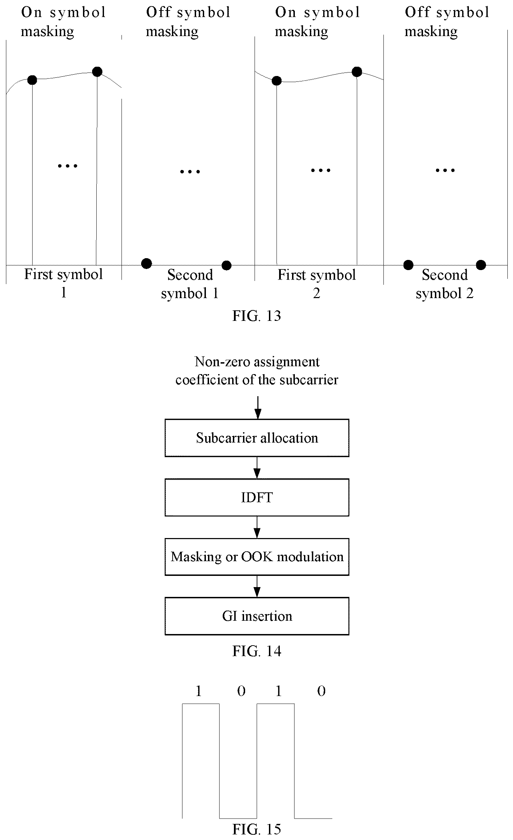

In some embodiments, using the 2.4 GHz frequency band with a subcarrier spacing of 312.5 kHz as an example, the multicarrier modulation symbol, output subsequent to performing the IDFT process, corresponding to 20 MHz may include 64 sample points, and the 64 sample points are divided into W parts (which may also be referred to as sample point sets). Different from FIG. 12, a masking operation is performed for the W parts (which may also be referred to as sample point sets) to generate the first symbols (such as the On symbols) and the second symbols (such as the Off symbols). As illustrated in FIG. 13, the OOK symbol sets "On-Off-On-Off" is masked by masking four parts of 64 sample points (each part includes 16 sample points) to generate four new parts (which may also be referred to as sample point sets), wherein energy of the sample point representing the Off symbol is zero. On symbols and Off symbols are generated by inserting GIs into the W parts. The masking process may also be used as an OOK modulation process. In the generation process of the OOK signal, the first OFDM transmitter generates a time-domain high-level signal with one multicarrier modulation symbol length, wherein the signal amplitude meets the requirements and is as flat as possible. On symbols and Off symbols in the time domain are generated by performing OOK modulation on the output signal of the IDFT. The symbol length of the OOK modulation may be set based on the need to generate signals with different rates.

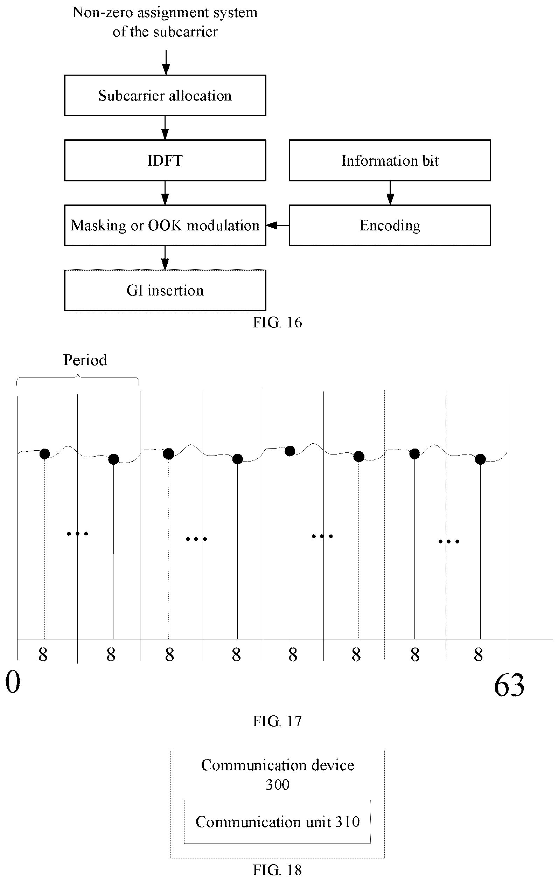

Specifically, the process of generating On symbols and Off symbols in the time domain may be illustrated in FIG. 14. The process of masking or the OOK modulation may use the above sampling value selection process or a masking window to achieve the generation of OOK symbols. As illustrated in FIG. 15, the masking window is used for generating 1010. In some embodiments, the window is a roll-off window to reduce out-of-band leakage. Specifically, 1010 corresponding to the masking window may be coded bits, for example, bits coded by Manchester coding, wherein information bit 0 is coded as 10 and information bit 1 is coded as 01. Specifically, an input of the process of masking or the OOK modulation may be coded bits of the information bit, as illustrated in FIG. 16.

In some embodiments, during the generation process of the OOK symbols, a variety of data rates may be flexibly achieved by combining the OOK symbol length, the coding rate, the subcarrier spacing (SCS), and the number of IDFT samples. Several possible combinations are provided hereinafter as examples, as illustrated in Table 1. The 312.54 kHz subcarrier spacing is used for Wi-Fi 2.4 GHz, and 31.25 kHz is used for Wi-Fi Sub 1 GHz. Using Manchester coding as an example, at 1/2 coding rate, information bit 0 is coded as 10, and information bit 1 is coded as 01; at 1/4 coding rate, information bit 0 is coded as 1010, and information bit 1 is coded as 0101.

Table 1

| SCS | OOK symbol length: (1/N) * IDFT symbol length + GI | Coding rate | data rate |
|---|---|---|---|
| 312.5 kHz | 1 μs, N=4; 0.5 μs, N=8 | 1/2 | 500 kbit/s; 1000 kbit/s |
| 312.5 kHz | 1 μs, N=4; 0.5 μs, N=8 | 1/4 | 250 kbit/s; 500 kbit/s |
| 31.25 kHz | 10 μs, N=4; 5 μs, N=8 | 1/2 | 50 kbit/s; 100 kbit/s |
| 31.25 kHz | 10 μs, N=4; 5 μs, N=8 | 1/4 | 25 kbit/s; 50 kbit/s |

It should be noted that, in Table 1, N represents the number of first symbols in a multicarrier modulation symbol output by the waveform generator associated with the first symbol subsequent to performing the IDFT process, N is a positive integer, IDFT symbol length represents a duration of the multicarrier modulation symbol output by the waveform generator associated with the first symbol subsequent to performing the IDFT process, and GI represents a duration of the GI.

The embodiments of the present disclosure do not require frequency domain extraction (which may also be referred to as subcarrier non-zero assignment), and a plurality of OOK symbols may be generated using one IDFT process without increasing the number of subcarriers.

In some embodiments, a first multicarrier modulation symbol includes W parts, wherein all first symbols corresponding to the first multicarrier modulation symbol are generated based on the W parts of the first multicarrier modulation symbol, and/or, all second symbols corresponding to the first multicarrier modulation symbol are generated based on the W parts of the first multicarrier modulation symbol, and an association is present between the W parts and the spacing between the non-zero assigned subcarriers, wherein W is a positive integer. In some embodiments, the first multicarrier modulation symbol is the multicarrier modulation symbol output by the waveform generator associated with the first symbol subsequent to performing the IDFT process. In some embodiments, the first multicarrier modulation symbol is an ODFM symbol.

In some embodiments, one of the W parts includes at least one sub-part, wherein one of the at least one sub-part corresponds to a symbol part of the first symbol or a symbol part of the second symbol. In some embodiments, the sub-part corresponding to the symbol part of the first symbol and the sub-part corresponding to the symbol part of the second symbol respectively correspond to different modulations or different masking operations.

In some embodiments, using the 2.4 GHz frequency band with a subcarrier spacing of 312.5 kHz as an example, the multicarrier modulation symbol, output subsequent to performing the IDFT process, corresponding to 20 MHz may include 64 sample points, and the 64 sample points are divided into W parts (which may also be referred to as sample point sets), and one of the W parts includes 2 sub-parts corresponding to different modulation or masking operations, respectively. Specifically, while extracting in the frequency domain, the time-domain signal may be intercepted for at least one period in the periodic signal, and On and Off symbols are generated by performing masking on the intercepted time-domain signal. As illustrated in FIG. 17, the frequency domain extraction period is 2, the spacing between the non-zero-assigned subcarriers is one subcarrier, and the waveform generated by the IDFT is repeated four times with a period of 16 sample points. The 16 sample points in each sample point period are divided into two groups of 8 sample points each. Two OOK symbols are generated in one period by performing different masking on different groups of sample points. 64 sample points output by the IDFT may be used to generate eight OOK symbols.

In some implementations, a variety of data rates may be flexibly achieved by combining the OOK symbol length, the frequency domain extraction period, the coding rate, the subcarrier spacing, and the IDFT sample points. Several examples of possible combinations are provided hereinafter, as listed in Table 2.

Table 2

| SCS | OOK symbol length: (1/N) * IDFT symbol length + GI | Frequency extraction period M | Coding rate | Data rate |
|---|---|---|---|---|
| 312.5 kHz | 1 μs, N=2; 0.5 μs, N=4 | 2 | 1/2 | 500 kbit/s; 1000 kbit/s |
| 312.5 kHz | 1 μs, N=2; 0.5 μs, N=4 | 2 | 1/4 | 250 kbit/s; 500 kbit/s |
| 31.25 kHz | 10 μs, N=2; 5 μs, N=4 | 4 | 1/2 | 100 kbit/s; 200 kbit/s |
| 31.25 kHz | 10 μs, N=2; 5 μs, N=4 | 4 | 1/4 | 50 kbit/s; 100 kbit/s |

It is to be noted that, in Table 2, N represents the number of first symbols in the multicarrier modulation symbol output by the waveform generator associated with the first symbol subsequent to performing the IDFT process, N is a positive integer, IDFT symbol length represents the duration of the multicarrier modulation symbol output by the waveform generator associated with the first symbol subsequent to performing the IDFT process, and GI represents the duration of the GI.

In some embodiments, the length of the first symbol is determined according to the following formula 1:

$$T = (1/N) * \text{IDFT symbol length} + \text{GI}; \text{(Formula 1)}$$

wherein T represents a length of the first symbol, N represents the number of first symbols in the multicarrier modulation symbol output by the waveform generator associated with the first symbol subsequent to performing the IDFT process, N is a positive integer, IDFT symbol length represents the duration of the multicarrier modulation symbol output by the waveform generator associated with the first symbol subsequent to performing the IDFT process, and GI represents the duration of the GI.

In some embodiments, a data transmission rate corresponding to the target signal is determined based on at least one of: a length of the first symbol, a length of the second symbol, the number of subcarriers, the spacing between the non-zero assigned subcarriers, the subcarrier spacing, the frequency bandwidth, or a coding rate.

Therefore, in the embodiments of the present disclosure, the first communication device may generate first symbols and/or second symbols in the target signal based on at least one of the number of subcarriers, the spacing between the non-zero-assigned subcarriers, the subcarrier spacing, or the frequency bandwidth, such that the first symbols with various lengths and/or the second symbols with various lengths are generated, and a more flexible and variable data transmission rate may be achieved for different coverage scenarios. That is, in the embodiments of the present disclosure, for the data transmission of the AMP device, or for the data transmission or the transmission of the WUR signal of the AMP device in the NR system, more flexible and variable data rates may be achieved for different coverage scenarios. In addition, the embodiments of the present disclosure simplify the process of generating the OOK signal, and one or more OOK symbols may be generated by one IDFT transformation.

Method embodiments of the present disclosure are described in detail above in combination with FIGS. 10 to 17, and apparatus embodiments of the present disclosure are described in detail hereinafter in combination with FIGS. 18 to 22. It should be understood that the apparatus embodiments correspond to the method embodiments. For similar descriptions, reference may be made to the method embodiments.

FIG. 18 illustrates a schematic block diagram of a communication device 300 according to some embodiments of the present disclosure. The communication device 300 is the first communication device. As illustrated in FIG. 18, the communication device 300 includes a communication unit 310.

The communication unit 310 is configured to transmit a target signal, wherein the target signal is a signal carrying information based on a signal amplitude, and the target signal includes n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

In some embodiments, in a case where the target signal at least includes the n first symbols, each of the first symbols includes a GI part and a symbol part, wherein a length of the symbol part of the first symbol is associated with at least one of: a number of subcarriers or a spacing between non-zero assigned subcarriers.

In some embodiments, in a case where the length of the first symbol is at least associated with the spacing between the non-zero-assigned subcarriers, an association between the length of the first symbol and the spacing between the non-zero-assigned subcarriers is specified in a protocol, or an association between the length of the first symbol and the spacing between the non-zero-assigned subcarriers is configured by a network device; and/or, in a case where the length of the first symbol is at least associated with the number of subcarriers, an association between the length of the first symbol and the number of subcarriers is specified in a protocol, or an association between the length of the first symbol and the number of subcarriers is configured by a network device.

In some embodiments, all first symbols corresponding to a first multicarrier modulation symbol are generated based on a first part of the first multicarrier modulation symbol.

In some embodiments, the first part is a 1/W part of the first multicarrier modulation symbol, wherein an association is present between a value of W and the spacing between the non-zero assigned subcarriers, and W is a positive integer.

In some embodiments, the first part is a first 1/W part of the first multicarrier modulation symbol, or the first part is a last 1/W part of the first multicarrier modulation symbol.

In some embodiments, the first part includes a part of an IDFT symbol length between $1/W * (i - 1) *$ IDFT symbol length and $1/W * i *$ IDFT symbol length, wherein i is a positive integer, $1 \leq i \leq W$, and the IDFT symbol length represents a duration of a multicarrier modulation symbol output by a waveform generator associated with the first symbol subsequent to performing an IDFT process.

In some embodiments, a first multicarrier modulation symbol includes W parts, wherein all first symbols corresponding to the first multicarrier modulation symbol are generated based on the W parts of the first multicarrier modulation symbol, and/or, all second symbols corresponding to the first multicarrier modulation symbol are generated based on the W parts of the first multicarrier modulation symbol, wherein W is a positive integer.

In some embodiments, one of the W parts corresponds to a symbol part of the first symbol or a symbol part of the second symbol.

In some embodiments, the part corresponding to the symbol part of the first symbol and the part corresponding to the symbol part of the second symbol respectively correspond to different modulations or different masking operations.

In some embodiments, an association is present between the W parts and the spacing between the non-zero assigned subcarriers.

In some embodiments, one of the W parts includes at least one sub-part, wherein one of the at least one sub-part corresponds to a symbol part of the first symbol or a symbol part of the second symbol.

In some embodiments, the sub-part corresponding to the symbol part of the first symbol and the sub-part corresponding to the symbol part of the second symbol respectively correspond to different modulations or different masking operations.

In some embodiments, the first multicarrier modulation symbol is a multicarrier modulation symbol output by a waveform generator associated with the first symbol subsequent to performing a discrete IDFT process.

In some embodiments, a length of the first symbol is determined according to the following formula:

$$T = (1/N) * \text{IDFT symbol length} + \text{GI};$$

wherein T represents a length of the first symbol, N represents a number of first symbols in a multicarrier modulation symbol output by a waveform generator associated with the first symbol subsequent to performing an IDFT process, N is a positive integer, IDFT symbol length represents a duration of the multicarrier modulation symbol output by the waveform generator associated with the first symbol subsequent to performing the IDFT process, and GI represents a duration of a GI.

In some embodiments, a data transmission rate corresponding to the target signal is determined based on at least one of: a length of the first symbol, a length of the second symbol, the number of subcarriers, the spacing between the non-zero assigned subcarriers, the subcarrier spacing, the frequency bandwidth, or a coding rate.

In some embodiments, the first communication device is an ambient energy base station, or the first communication device is an ambient energy access point, or the first communication device is an ambient energy relay device.

In some embodiments, the above communication unit may be a communication interface or transceiver, or an input/output interface of a communication chip or a system-on-chip. The processing unit may be one or more processors.

It should be understood that the communication device 300 according to the embodiments of the present disclosure may correspond to the first communication device in the method embodiments of the present disclosure, and that the above and other operations and/or functions of the various units in the communication device 300 are intended to perform the corresponding processes of the first communication device in the method 200 illustrated in FIG. 10, respectively, which are not elaborated herein for brevity.

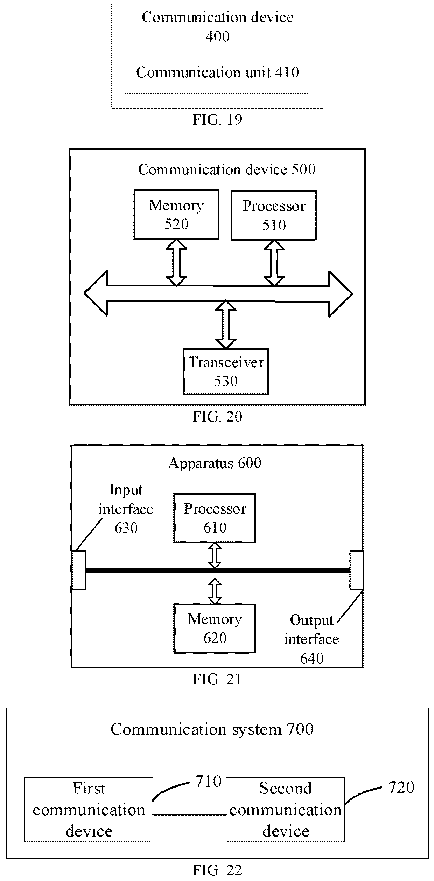

FIG. 19 illustrates a schematic block diagram of a communication device 400 according to some embodiments of the present disclosure. The communication device 400 is the second communication device. As illustrated in FIG. 19, the communication device 400 includes a communication unit 410.

The communication unit 410 is configured to receive a target signal, wherein the target signal is a signal carrying information based on a signal amplitude, and the target signal includes n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

In some embodiments, in a case where the target signal at least includes the n first symbols, each of the first symbols includes a GI part and a symbol part, wherein a length of the symbol part of the first symbol is associated with at least one of: a number of subcarriers or a spacing between non-zero assigned subcarriers.

In some embodiments, in a case where the length of the first symbol is at least associated with the spacing between the non-zero-assigned subcarriers, an association between the length of the first symbol and the spacing between the non-zero-assigned subcarriers is specified in a protocol, or an association between the length of the first symbol and the spacing between the non-zero-assigned subcarriers is configured by a network device; and/or, in a case where the length of the first symbol is at least associated with the number of subcarriers, an association between the length of the first symbol and the number of subcarriers is specified in a protocol, or an association between the length of the first symbol and the number of subcarriers is configured by a network device.

In some embodiments, all first symbols corresponding to a first multicarrier modulation symbol are generated based on a first part of the first multicarrier modulation symbol.

In some embodiments, the first part is a 1/W part of the first multicarrier modulation symbol, wherein an association is present between a value of W and the spacing between the non-zero assigned subcarriers, and W is a positive integer.

In some embodiments, the first part is a first 1/W part of the first multicarrier modulation symbol, or the first part is a last 1/W part of the first multicarrier modulation symbol.

In some embodiments, the first part includes a part of an IDFT symbol length between $1/W * (i - 1) * \text{IDFT symbol length}$ and $1/W * i * \text{IDFT symbol length}$, wherein i is a positive integer, $1 \leq i \leq W$, and the IDFT symbol length represents a duration of a multicarrier modulation symbol output by a waveform generator associated with the first symbol subsequent to performing an IDFT process.

In some embodiments, a first multicarrier modulation symbol includes W parts, wherein all first symbols corresponding to the first multicarrier modulation symbol are generated based on the W parts of the first multicarrier modulation symbol, and/or, all second symbols corresponding to the first multicarrier modulation symbol are generated based on the W parts of the first multicarrier modulation symbol, wherein W is a positive integer.

In some embodiments, one of the W parts corresponds to a symbol part of the first symbol or a symbol part of the second symbol.

In some embodiments, the part corresponding to the symbol part of the first symbol and the part corresponding to the symbol part of the second symbol respectively correspond to different modulations or different masking operations.

In some embodiments, an association is present between the W parts and the spacing between the non-zero assigned subcarriers.

In some embodiments, one of the W parts includes at least one sub-part, wherein one of the at least one sub-part corresponds to a symbol part of the first symbol or a symbol part of the second symbol.

In some embodiments, the sub-part corresponding to the symbol part of the first symbol and the sub-part corresponding to the symbol part of the second symbol respectively correspond to different modulations or different masking operations.

In some embodiments, the first multicarrier modulation symbol is a multicarrier modulation symbol output by a waveform generator associated with the first symbol subsequent to performing a discrete IDFT process.

In some embodiments, a length of the first symbol is determined according to the following formula:

$$T = (1/N) * \text{IDFT symbol length} + GI;$$

wherein T represents a length of the first symbol, N represents a number of first symbols in a multicarrier modulation symbol output by a waveform generator associated with the first symbol subsequent to performing an IDFT process, N is a positive integer, IDFT symbol length represents a duration of the multicarrier modulation symbol output by the waveform generator associated with the first symbol subsequent to performing the IDFT process, and GI represents a duration of a GI.

In some embodiments, a data transmission rate corresponding to the target signal is determined based on at least one of: a length of the first symbol, a length of the second symbol, the number of subcarriers, the spacing between the non-zero assigned subcarriers, the subcarrier spacing, the frequency bandwidth, or a coding rate.

In some embodiments, the second communication device is an ambient energy terminal, or the second communication device is an ambient energy station, or the second communication device is a zero-power device.

In some embodiments, the above communication unit may be a communication interface or transceiver, or an input/output interface of a communication chip or a system-on-chip. The processing unit may be one or more processors.

It should be understood that the communication device 400 according to the embodiments of the present disclosure may correspond to the second communication device in the method embodiments of the present disclosure, and that the above and other operations and/or functions of the various units in the communication device 400 are intended to perform the corresponding processes performed by the second communication device in the method 200 illustrated in FIG. 10, respectively, which are not elaborated herein for brevity.

FIG. 20 is a schematic structural diagram of a communication device 500 according to some embodiments of the present disclosure. The communication device 500 illustrated in FIG. 20 includes a processor 510. The processor 510, when calling and running at least one computer program from a memory, is caused to perform the methods according to the embodiments of the present disclosure.

In some embodiments, as illustrated in FIG. 20, the communication device 500 further includes a memory 520. The processor 510, when calling and running at least one computer program from the memory 520, is caused to perform the methods according to the embodiments of the present disclosure.

The memory 520 is a separate device from the processor 510, or the memory 520 is integrated into the processor 510.

In some embodiments, as illustrated in FIG. 20, the communication device 500 further includes a transceiver 530, wherein the transceiver 530 is controlled by the processor 510 to communicate with other devices. In some embodiments, the transceiver 530 transmits information or data to other devices or receives information or data from other devices.

The transceiver 530 includes a transmitter and a receiver. In some embodiments, the transceiver 530 further includes one or more antennas.

In some embodiments, the processor 510 may implement the function of the processing unit in the communication device, which is not elaborated herein for brevity.

In some embodiments, the transceiver 530 may implement the function of the processing unit in at least one of the communication device 300 or the communication device 400, which is not elaborated herein for brevity.

In some embodiments, the communication device 500 is the communication device 300 according to the embodiments of the present disclosure, and the communication device 500 achieves the corresponding processes achieved by the first communication device in the various methods according to the embodiments of the present disclosure, which are not elaborated herein for brevity.

In some embodiments, the communication device 500 is the communication device 400 according to the embodiments of the present disclosure, and the communication device 500 achieves the corresponding processes achieved by the second communication device in the various methods according to the embodiments of the present disclosure, which are not elaborated herein for brevity.

FIG. 21 is a schematic structural diagram of an apparatus according to some embodiments of the present disclosure. The apparatus 600 illustrated in FIG. 21 includes a processor 610. The processor 610, when calling and running at least one computer program from a memory, is caused to perform the methods according to the embodiments of the present disclosure.

In some embodiments, as illustrated in FIG. 21, the apparatus 600 further includes a memory 620. The processor 610, when calling and running at least one computer program from the memory 620, is caused to perform the methods according to the embodiments of the present disclosure.

The memory 620 is a separate device from the processor 610, or the memory 620 is integrated into the processor 610.

In some embodiments, the processor 610 may implement the function of the processing unit in at least one of the communication device 300 or the communication device 400, which is not elaborated herein for brevity.

In some embodiments, the apparatus 600 further includes an input interface 630, wherein the input interface 630 is controlled by the processor 610 to communicate with other devices. For example, the input interface 630 receives information or data from other devices or chips. In some embodiments, the processor 610 is disposed within the chip or outside the chip.

In some embodiments, the input interface 630 may implement the function of the communication unit in at least one of the communication device 300 or the communication device 400, which is not elaborated herein for brevity.

In some embodiments, the apparatus 600 further includes an output interface 640, wherein the output interface 640 is controlled by the processor 610 to communicate with other devices. For example, the output interface 640 transmits information or data to other devices or chips. In some embodiments, the processor 610 is disposed within the chip or outside the chip.

In some embodiments, the output interface 640 may implement the function of the communication unit in at least one of the communication device 300 or the communication device 400, which is not elaborated herein for brevity.

In some embodiments, the apparatus is applied to the communication device according to the embodiments of the present disclosure, and the apparats achieves the corresponding processes achieved by the first communication device or the second communication device in the various methods according to the embodiments of the present disclosure, which are not elaborated herein for brevity.

In some embodiments, the apparatus in the embodiments of the present disclosure may be a systematic chip, a system chip, a chip system, a system-on-chip, or the like.

FIG. 22 is a schematic block diagram of a communication system 700 according to some embodiments of the present disclosure. As illustrated in FIG. 22, the communication system 700 includes a first communication device 10 and a second communication device 720.

The first communication device 710 is configured to perform the corresponding function achieved by the first communication device in the methods described above, and the second communication device 720 is configured to perform the corresponding function achieved by the second communication device in the methods described above, which are not elaborated herein for brevity.

It is understandable that the processor according to the embodiments of the present disclosure is an integrated circuit chip with signal-processing capabilities. In implementation, the processes of the method embodiments described above are accomplished by integrated logic circuits of hardware in the processor or by instructions in the form of software. The above-described processor is a general-purpose processor, a digital signal processor (DSP), an application-specific integrated circuit (ASIC), a field-programmable gate array (FPGA) or other programmable logic device, a discrete gate or transistor logic device, or a discrete hardware component. Various methods, processes, and logic block diagrams according to the embodiments of the present disclosure are implemented or performed. The general-purpose processor is a microprocessor or the processor is any conventional processor. The processes of the methods disclosed in conjunction with the embodiments in the present disclosure are directly embodied as being performed by a hardware decoding processor, or performed with a combination of hardware and software modules in a decoding processor. The software module is configured in a random memory, a flash memory, a read-only memory, a programmable read-only memory or an electrically erasable programmable memory, a register, or other storage medium well established in the art. The storage medium is configured in a memory, and the processor reads information from the memory to perform the processes of the above methods in conjunction with the hardware.

It is understandable that the memory according to the embodiments of the present disclosure is a volatile memory or a non-volatile memory, or the memory includes both the volatile memory and the non-volatile memory. The non-volatile memory is a read-only memory (ROM), a programmable ROM (PROM), an erasable PROM (EPROM), an electrically EPROM (EEPROM), or a flash memory. The volatile memory is a random-access memory (RAM), wherein the RAM is configured as an external cache. By way of illustration, but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), or a direct rambus RAM (DR RAM). It should be noted that the memory in the system and method described herein is intended to include, but is not limited to, these and any other suitable types of memory.

It is understandable that the above memories are exemplary but not limiting descriptions. For example, the memory according to the embodiments of the present disclosure is a SRAM, a DRAM, a SDRAM, a DDR SDRAM, an ESDRAM, a SLDRAM, or a DR RAM. That is, the memory according to the embodiments of the present disclosure is intended to include, but is not limited to, these and any other suitable types of memory.

Some embodiments of the present disclosure further provide a computer-readable storage medium for storing at least one computer program.

In some embodiments, the computer-readable storage medium is applied to the communication device according to the embodiments of the present disclosure. The at least one computer program, when loaded and run by a computer, causes the computer to perform the corresponding processes performed by the first communication device or the second communication device in the various methods according to the embodiments of the present disclosure, which are not described herein for brevity.

Some embodiments of the present disclosure further provide a computer program product including at least one computer program instruction.

In some embodiments, the computer program product is applied to the communication device according to the embodiments of the present disclosure. The at least one computer program instruction, when loaded and run by a computer, causes the computer to perform the corresponding processes performed by the first communication device or the second communication device in the various methods according to the embodiments of the present disclosure, which are not repeated herein for brevity.

Some embodiments of the present disclosure further provide a computer program.

In some embodiments, the computer program is applied to the communication device according to the embodiments of the present disclosure. The computer program, when loaded and run on a computer, causes the computer to perform the corresponding processes performed by the first communication device or the second communication device in the various methods according to the embodiments of the present disclosure, which are not repeated herein for brevity.

It should be noted by those skilled in the art that the units and algorithmic processes described in conjunction with the various examples of the embodiments disclosed herein may be performed by electronic hardware or a combination of computer software and electronic hardware. Whether these functions are performed in hardware or software depends on the particular application and design constraints of the technical solution. Those skilled in the art may use different methods to implement the described functions for each particular application, but such implementations should not be considered outside the scope of this application.

It should be clear to those skilled in the art that for the convenience and brevity of description, the specific working processes of the systems, apparatuses, and units described above are referred to the corresponding processes in the above method embodiments, which are not elaborated herein for brevity.

In the several embodiments provided in the present disclosure, it is understandable that the systems, apparatuses, and methods disclosed may be performed in other ways. For example, the above-described embodiments of the apparatus are merely schematic. For example, the division of the units described herein is merely a logical functional division, and in practice, the units may be divided in other ways. For example, a plurality of units or components may be combined or may be integrated into another system, or some features may be ignored, or not implemented. In addition, the coupling or direct coupling or communication connection between each other illustrated or discussed may be achieved via some interfaces, an indirect coupling or communication connection between devices or units may be electrical, mechanical, or otherwise.

The units illustrated as separated components may or may not be physically separated, and components shown as units may or may not be physical units. That is, the units or components may be arranged in a single place or may be distributed to a plurality of network units. Some or all of these units may be selected to fulfill the purpose of the present embodiment scheme based on actual needs.

In addition, the functional units in various embodiments of the present disclosure may be integrated into a single processing unit, or each unit may be physically present separately, or two or more units may be integrated into a single unit.

The function may be stored in a computer-readable storage medium in a case where the function is implemented as a software functional unit and sold or used as a separate product. With this understanding, the essence of the technical solution of the present application, a part of the technical solution which contributes to the related art, or a part of the technical solution may be embodied in the form of a software product. The computer software product is stored in a storage medium including several instructions to cause a computer device (which may be a personal computer, a server, or a network device) to perform all or part of the processes of the method described in various embodiments of the present disclosure. The aforementioned storage medium includes a USB flash drive, a removable hard disk, a ROM, a RAM, a diskette, a flash disk, or other medium that store program codes.

Described above are merely specific embodiments of the present disclosure, but the protection scope of the present disclosure is not limited thereto. Those skilled in the art who are familiar with the technical field would readily envisage variations or substitutions within the scope of the technology disclosed in the present disclosure, which shall be covered by the protection scope of the present disclosure. Therefore, the protection scope of this application shall be subject to the protection scope of the appended claims.

**Claims**

1.  A method for wireless communication, performed by a first communication device, the method comprising:

    transmitting a target signal, wherein the target signal is a signal carrying information based on a signal amplitude, and the target signal comprises n first symbols and/or m second symbols, wherein the first symbols are at a first level, and the second symbols are at a second level, the first level being higher than the second level, and m and n being positive integers;
    wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

2.  The method according to claim 1, wherein in a case where the target signal at least comprises the n first symbols, each of the first symbols comprises a guard interval (GI) part and a symbol part, wherein a length of the symbol part of the first symbol is associated with at least one of: the number of subcarriers or the spacing between the non-zero assigned subcarriers.

3.  The method according to claim 2, wherein

    in a case where the length of the first symbol is at least associated with the spacing between the non-zero-assigned subcarriers, an association between the length of the first symbol and the spacing between the non-zero-assigned subcarriers is specified in a protocol, or an association between the length of the first symbol and the spacing between the non-zero-assigned subcarriers is configured by a network device; and/or
    in a case where the length of the first symbol is at least associated with the number of subcarriers, an association between the length of the first symbol and the number of subcarriers is specified in a protocol, or an association between the length of the first symbol and the number of subcarriers is configured by a network device.

4.  The method according to any one of claims 1 to 3, wherein all first symbols corresponding to a first multicarrier modulation symbol are generated based on a first part of the first multicarrier modulation symbol.

5.  The method according to claim 4, wherein the first part is a 1/W part of the first multicarrier modulation symbol, wherein an association is present between a value of W and the spacing between the non-zero assigned subcarriers, and W is a positive integer.

6.  The method according to claim 5, wherein the first part is a first 1/W part of the first multicarrier modulation symbol, or the first part is a last 1/W part of the first multicarrier modulation symbol.

7.  The method according to claim 5, wherein the first part comprises a part of an inverse discrete Fourier transform (IDFT) symbol length between $1/W * (i - 1) * $ IDFT symbol length and $1/W * i * $ IDFT symbol length, wherein i is a positive integer, $1 \leq i \leq W$, and the IDFT symbol length represents a duration of a multicarrier modulation symbol output by a waveform generator associated with the first symbol subsequent to performing an IDFT process.

8.  The method according to any one of claims 1 to 3, wherein a first multicarrier modulation symbol comprises W parts, wherein all first symbols corresponding to the first multicarrier modulation symbol are generated based on the W parts of the first multicarrier modulation symbol, and/or, all second symbols corresponding to the first multicarrier modulation symbol are generated based on the W parts of the first multicarrier modulation symbol, wherein W is a positive integer.

9.  The method according to claim 8, wherein one of the W parts corresponds to a symbol part of the first symbol or a symbol part of the second symbol.

10. The method according to claim 9, wherein the part corresponding to the symbol part of the first symbol and the part corresponding to the symbol part of the second symbol respectively correspond to different modulations or different masking operations.

11. The method according to claim 8, wherein an association is present between the W parts and the spacing between the non-zero assigned subcarriers.

12. The method according to claim 11, wherein one of the W parts comprises at least one sub-part, wherein one of the at least one sub-part corresponds to a symbol part of the first symbol or a symbol part of the second symbol.

13. The method according to claim 12, wherein the sub-part corresponding to the symbol part of the first symbol and the sub-part corresponding to the symbol part of the second symbol respectively correspond to different modulations or different masking operations.

14. The method according to any one of claims 4 to 13, wherein the first multicarrier modulation symbol is a multicarrier modulation symbol output by a waveform generator associated with the first symbol subsequent to performing an inverse discrete Fourier transform (IDFT) process.

15. The method according to any one of claims 1 to 14, wherein a length of the first symbol is determined according to the following formula:

$$T = (1/N) * \text{IDFT symbol length} + GI;$$

wherein T represents a length of the first symbol, N represents a number of first symbols in a multicarrier modulation symbol output by a waveform generator associated with the first symbol subsequent to performing an inverse discrete Fourier transform (IDFT) process, N is a positive integer, IDFT symbol length represents a duration of the multicarrier modulation symbol output by the waveform generator associated with the first symbol subsequent to performing the IDFT process, and GI represents a duration of a guard band (GI).

16. The method according to any one of claims 1 to 15, wherein a data transmission rate corresponding to the target signal is determined based on at least one of: a length of the first symbol, a length of the second symbol, the number of subcarriers, the spacing between the non-zero assigned subcarriers, the subcarrier spacing, the frequency bandwidth, or a coding rate.

17. The method according to any one of claims 1 to 16, wherein the first communication device is an ambient energy base station, or the first communication device is an ambient energy access point, or the first communication device is an ambient energy relay device.

18. A method for wireless communication, performed by a second communication device, the method including:

    receiving a target signal, wherein the target signal is a signal carrying information based on a signal amplitude, and the target signal comprises n first symbols and/or m second symbols, wherein the first symbols are at a first level, and the second symbols are at a second level, the first level being higher than the second level, and m and n being positive integers;
    wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

19. The method according to claim 18, wherein in a case where the target signal at least comprises the n first symbols, each of the first symbols comprises a guard interval (GI) part and a symbol part, wherein a length of the symbol part of the first symbol is associated with at least one of: a number of subcarriers or a spacing between non-zero assigned subcarriers.

**20.** The method according to claim 19, wherein

in a case where the length of the first symbol is at least associated with the spacing between the non-zero-assigned subcarriers, an association between the length of the first symbol and the spacing between the non-zero-assigned subcarriers is specified in a protocol, or an association between the length of the first symbol and the spacing between the non-zero-assigned subcarriers is configured by a network device; and/or
in a case where the length of the first symbol is at least associated with the number of subcarriers, an association between the length of the first symbol and the number of subcarriers is specified in a protocol, or an association between the length of the first symbol and the number of subcarriers is configured by a network device.

**21.** The method according to any one of claims 18 to 20, wherein all first symbols corresponding to a first multicarrier modulation symbol are generated based on a first part of the first multicarrier modulation symbol.

**22.** The method according to claim 21, wherein the first part is a 1/W part of the first multicarrier modulation symbol, wherein an association is present between a value of W and the spacing between the non-zero assigned subcarriers, and W is a positive integer.

**23.** The method according to claim 22, wherein the first part is a first 1/W part of the first multicarrier modulation symbol, or the first part is a last 1/W part of the first multicarrier modulation symbol.

**24.** The method according to claim 22, wherein the first part comprises a part of an inverse discrete Fourier transform (IDFT) symbol length between 1/W * (i - 1) * IDFT symbol length and 1/W * i * IDFT symbol length, wherein i is a positive integer, $1 \le i \le W$, and the IDFT symbol length represents a duration of a multicarrier modulation symbol output by a waveform generator associated with the first symbol subsequent to performing an IDFT process.

**25.** The method according to any one of claims 18 to 20, wherein a first multicarrier modulation symbol comprises W parts, wherein all first symbols corresponding to the first multicarrier modulation symbol are generated based on the W parts of the first multicarrier modulation symbol, and/or, all second symbols corresponding to the first multicarrier modulation symbol are generated based on the W parts of the first multicarrier modulation symbol, wherein W is a positive integer.

**26.** The method according to claim 25, wherein one of the W parts corresponds to a symbol part of the first symbol or a symbol part of the second symbol.

**27.** The method according to claim 26, wherein the part corresponding to the symbol part of the first symbol and the part corresponding to the symbol part of the second symbol respectively correspond to different modulations or different masking operations.

**28.** The method according to claim 25, wherein an association is present between the W parts and the spacing between the non-zero assigned subcarriers.

**29.** The method according to claim 28, wherein one of the W parts comprises at least one sub-part, wherein one of the at least one sub-part corresponds to a symbol part of the first symbol or a symbol part of the second symbol.

**30.** The method according to claim 29, wherein the sub-part corresponding to the symbol part of the first symbol and the sub-part corresponding to the symbol part of the second symbol respectively correspond to different modulations or different masking operations.

**31.** The method according to any one of claims 21 to 30, wherein the first multicarrier modulation symbol is a multicarrier modulation symbol output by a waveform generator associated with the first symbol subsequent to performing a discrete inverse discrete Fourier transform (IDFT) process.

**32.** The method according to any one of claims 18 to 31, wherein a length of the first symbol is determined according to the following formula:

$$T = (1/N) * \text{IDFT symbol length} + GI;$$

wherein T represents a length of the first symbol, N represents a number of first symbols in a multicarrier modulation symbol output by a waveform generator associated with the first symbol subsequent to performing an inverse discrete Fourier transform (IDFT) process, N is a positive integer, IDFT symbol length represents a duration of the multicarrier modulation symbol output by the waveform generator associated with the first symbol subsequent to performing the IDFT process, and GI represents a duration of a guard band (GI).

33. The method according to any one of claims 18 to 32, wherein a data transmission rate corresponding to the target signal is determined based on at least one of: a length of the first symbol, a length of the second symbol, the number of subcarriers, the spacing between the non-zero assigned subcarriers, the subcarrier spacing, the frequency bandwidth, or a coding rate.

34. The method according to any one of claims 18 to 33, wherein the second communication device is an ambient energy terminal, or the second communication device is an ambient energy station, or the second communication device is a zero-power device.

35. A communication device, wherein the communication device is a first communication device, the communication device comprising:
a communication unit, configured to transmit a target signal, wherein the target signal is a signal carrying information based on a signal amplitude, and the target signal comprises n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

36. A communication device, wherein the communication device is a second communication device, the communication device comprising:
a communication unit, configured to receive a target signal, wherein the target signal is a signal carrying information based on a signal amplitude, and the target signal comprises n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or, the m second symbols are generated based on at least one of: a number of subcarriers, a spacing between non-zero assigned subcarriers, a subcarrier spacing, or a frequency bandwidth.

37. A communication device, wherein the communication device is a first communication device, the communication device comprising: a processor and a memory configured to store at least one computer program, wherein the processor, when loading and running the at least one computer program from the memory, causes the communication device to perform the method as defined in any one of claims 1 to 17.

38. A communication device, wherein the communication device is a second communication device, the communication device comprising: a processor and a memory configured to store at least one computer program, wherein the processor, when loading and running the at least one computer program from the memory, causes the communication device to perform the method as defined in any one of claims 18 to 34.

39. A chip, comprising: a processor, wherein the processor, when loading and running at least one computer program from a memory, causes a device equipped with the chip to perform the method as defined in any one of claims 1 to 17.

40. A chip, comprising: a processor, wherein the processor, when loading and running at least one computer program from a memory, causes a device equipped with the chip to perform the method as defined in any one of claims 18 to 34.

41. A computer-readable storage medium, wherein the computer-readable storage medium is configured to store at least one computer program, wherein the at least one computer program, when loaded and run by a computer, causes the computer to perform the method as defined in any one of claims 1 to 17.

42. A computer-readable storage medium, wherein the computer-readable storage medium is configured to store at least one computer program, wherein the at least one computer program, when loaded and run by a computer, causes the computer to perform the method as defined in any one of claims 18 to 34.

43. A computer program product, comprising: at least one computer program instruction, wherein the at least one computer program instruction, when loaded and executed by a computer, causes the computer to perform the method as defined in any one of claims 1 to 17.

44. A computer program product, comprising: at least one computer program instruction, wherein the at least one computer program instruction, when loaded and executed by a computer, causes the computer to perform the method as defined in any one of claims 18 to 34.

45. A computer program, wherein the computer program, when loaded and run by a computer, causes the computer to perform the method as defined in any one of claims 1 to 17.

46. A computer program, wherein the computer program, when loaded and run by a computer, causes the computer to perform the method as defined in any one of claims 18 to 34.

**100**

FIG. 1

FIG. 2

WUR PPDU

| Conventional preamble | WUR-Sync | WUR-Data |
|---|---|---|

20 MHz preamble, OFDM modulation      4 MHz WUR part

FIG. 3

WUR synchronization sequence

FIG. 4

Information
bit → WUR
encoder

On-WG → Bit '1'

Off-WG → Bit '0'

→ Window → Analog and
radio frequency

FIG. 5

MC-
OOK
symbol
'1'

MC-
OOK
symbol
'0'

FIG. 6

Non-zero assignment
coefficient of the
subcarrier

↓

Subcarrier allocation

↓

IDFT

↓

Selecting the first half of
sample points output by
the IDFT

↓

Symbol randomizer

↓

GI insertion

FIG. 7

0     32 sample
points

32 sample
points     63

FIG. 8

GI

0μs    0.4μs                  2μs

FIG. 9

**200**

| First communication device | Second communication device |

S210, the first communication device transmits a target signal to the second communication device, wherein the target signal is a signal carrying information based on a signal amplitude, and the target signal includes n first symbols and/or m second symbols, wherein the first symbols are at a first level, and the second symbols are at a second level, the first level being higher than the second level, and m and n being positive integers; wherein the n first symbols are generated based on at least one of: a number of subcarriers, a spacing between non-zero assigned subcarriers, a subcarrier spacing, or a frequency bandwidth; and/or the m second symbols are generated based on at least one of: a number of subcarriers, a spacing between non-zero assigned subcarriers, a subcarrier spacing, or a frequency bandwidth

S220, the second communication device receives the target signal from the first communication device

FIG. 10

| 16 sample points | 16 sample points | 16 sample points | 16 sample points |

...         ...         ...         ...

First symbol    First symbol    First symbol    First symbol

0                                                         63

FIG. 11

16 sample points

First symbol 1 | First symbol 2 | First symbol 3 | First symbol 4

0

63

16 sample points

20 sample points

16 sample points

First symbol 1

FIG. 12

On symbol          Off symbol          On symbol          Off symbol
masking            masking             masking            masking

First symbol       Second              First symbol       Second
1                  symbol 1            2                  symbol 2

FIG. 13

Non-zero assignment
coefficient of the subcarrier

Subcarrier allocation

IDFT

Masking or OOK modulation

GI insertion

FIG. 14

1     0     1     0

FIG. 15

Non-zero assignment system
of the subcarrier

Subcarrier allocation

IDFT

Information bit

Masking or OOK modulation ← Encoding

GI insertion

FIG. 16

Period

8   8   8   8   8   8   8   8

0                                    63

FIG. 17

Communication device
300

Communication unit 310

FIG. 18

Communication device
400

Communication unit 410

FIG. 19

Communication device 500

Memory
520

Processor
510

Transceiver
530

FIG. 20

Apparatus 600

Input
interface
630

Processor
610

Memory
620

Output
interface
640

FIG. 21

Communication system 700

First
communication
device

710

Second
communication
device

720

FIG. 22

## INTERNATIONAL SEARCH REPORT

| International application No. |
|---|
| **PCT/CN2023/077999** |

| **A.** | **CLASSIFICATION OF SUBJECT MATTER** |
|---|---|

H04L 27/04(2006.01)i

According to International Patent Classification (IPC) or to both national classification and IPC

| **B.** | **FIELDS SEARCHED** |
|---|---|

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, 3GPP: 承载, 电平, 幅度, 符号, 间隔, 信号, 信息, 载波, 子载波, 开关键控, OOK, OFF, ON, carry, level, amplitude, symbol, spacing, signal, information, carrier, subcarrier

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 110999418 A (LG ELECTRONICS INC.) 10 April 2020 (2020-04-10) description, paragraphs [0122]-[0311] | 1-46 |
| A | CN 114556842 A (HUAWEI TECHNOLOGIES CO., LTD.) 27 May 2022 (2022-05-27) entire document | 1-46 |
| A | US 2020106651 A1 (LG ELECTRONICS INC.) 02 April 2020 (2020-04-02) entire document | 1-46 |
| A | INTEL CORP. "NR slot definition for subcarrier spacings up to and including 60kHz" *3GPP TSG RAN WG1 Meeting #87, R1-1611960*, 18 November 2016 (2016-11-18), entire document | 1-46 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 October 2023** | **17 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/077999**

| Patent document cited in search report | | | Publication date (day/month/year) | Patent family member(s) | | | Publication date (day/month/year) |
|---|---|---|---|---|---|---|---|
| CN | 110999418 | A | 10 April 2020 | EP | 3634046 | A1 | 08 April 2020 |
| | | | | WO | 2019245158 | A1 | 26 December 2019 |
| | | | | US | 2022346009 | A1 | 27 October 2022 |
| | | | | ES | 2901549 | T3 | 22 March 2022 |
| CN | 114556842 | A | 27 May 2022 | WO | 2021097597 | A1 | 27 May 2021 |
| | | | | EP | 4044483 | A1 | 17 August 2021 |
| | | | | US | 2022278886 | A1 | 01 September 2022 |
| | | | | KR | 20220098371 | A | 12 July 2022 |
| US | 2020106651 | A1 | 02 April 2020 | WO | 2018174523 | A2 | 27 September 2018 |

Form PCT/ISA/210 (patent family annex) (July 2022)